# EUROPÄISCHE PATENTSCHRIFT

(11) **EP 1 403 026 B1**
(45) Veröffentlichungstag und Bekanntmachung des Hinweises auf die Patenterteilung: **17.03.2010**
(21) Anmeldenummer: 03103450.7
(22) Anmeldetag: 18.09.2003
(51) Int. Cl.: B29C 47/90, B29C 47/08, B29C 47/12, F16B 19/02

(54) **Set von Passkörpern/Passfedern und ihre Verwendung zum Ausrichten von Werkzeugteilen**
A set of channel nuts and their use for aligning mould parts
Un ensemble de clavettes/ressorts d'ajustage et son utilisation pour positioner des pièces

(30) Priorität: 18.09.2002 DE 10243429
(43) Veröffentlichungstag der Anmeldung: 31.03.2004
(73) Patentinhaber: profine GmbH, 53840 Troisdorf (DE)
(72) Erfinder: Vogt, Dieter, 66978, Clausen (DE)
(74) Vertreter: Wübken, Ludger

(56) Entgegenhaltungen:
- EP-A- 0 849 066
- DE-U- 20 015 569
- US-B1- 6 244 847

## Beschreibung

Die Erfindung betrifft ein Verfahren zur Fixierung und/oder Justierung der relativen Position wenigstens zweier an einer ebenen Trennfläche aneinandergrenzender Teilbereiche eines formgebenden und/oder stützenden Elementes einer Extrusionsanlage, insbesondere eines Extrusionswerkzeuges.

### Technisches Gebiet

Extrusionsanlagen, beispielsweise zur Herstellung von Fensterprofilen, umfassen zum einen einen Extruder zum Aufschmelzen und Homogenisieren des Kunststoff-Ansatzes, sowie ein Extrusionswerkzeug, das im Falle der Profilextrusion in der Regel aus zwei Hauptkomponenten besteht, nämlich dem Extruder-Mundstück, in dem das Profil seine wesentliche äußere und innere Form erhält, sowie ein nachfolgend angeordnetes Kalibrierwerkzeug, in dem die äußere Kontur des Profils unter Abkühlung seine endgültige Form erhält.

### Stand der Technik

Extrusions-Werkzeuge werden gewöhnlich modular aufgebaut. Das Extrusions-Mundstück wird dabei häufig - in Extrusionsrichtung betrachtet - horizontal und/oder vertikal geteilt, wobei die einzelnen benachbarten Elemente mit ebenen Trennflächen aneinandergrenzen. Diese werden u.a. in den EP 0 849 066 oder den DE 20015569 offenbart.

Kalibrierwerkzeuge weisen üblicherweise mehrere in Extrusionsrichtung hintereinander angeordnete Kalibrierabschnitte und Stützelemente auf, die jeweils wiederum aus mehreren einzelnen Elementen mit ebenen Trennflächen zusammengesetzt sein können.

Die einzelnen mit ebenen Trennflächen aneinandergrenzenden Teilbereiche der formgebenden und/oder stützenden Elemente eines Extrusions-Werkzeuges müssen beim Zusammenbau exakt zueinander in ihrer relativen Position fixiert und/oder justiert werden, um die Profilgeometrie des zu extrudierenden Profils genau einzustellen. Insbesondere bei Werkzeuganpassungen, geringfügigen Änderungen der Profilgeometrie oder auch zum Ausgleich von Fertigungstoleranzen ist es gelegentlich notwendig, die relative Position zweier aneinandergrenzenden Teile eines solchen formgebenden und/oder stützenden Elementes eines Extrusions-Werkzeuges zu ändern bzw. neu zu justieren.

### Aufgabe

Aufgabe der vorliegenden Erfindung ist es, ein Verfahren sowie Mittel zur Verfügung zu stellen, um ein Fixieren und/oder Justieren der relativen Position wenigstens zweier an einer ebenen Trennfläche aneinandergrenzenden Teilbereiche eines formgebenden und/oder stützenden Elementes einer Extrusionsanlage, insbesondere eines Extrusions-Werkzeuges, zu ermöglichen.

### Darstellung der Erfindung

Die Erfindung löst diese Aufgabe durch ein Passkörper und ein Verfahren gemäß der Ansprüche 1 oder 7, bzw. durch einen Satz von sogenannten Passkörpern gemäß Anspruch 4, bevorzugt in Verbindung mit einem oder mehreren der Merkmale der Unteransprüche.

Der Kern der vorliegenden Erfindung liegt somit in der Verwendung wenigstens eines Passkörpers, wobei der Passkörper - im Querschnitt betrachtet - einen oberen und einen unteren Teilquerschnitt aufweist, wobei die beiden Teilquerschnitte gegeneinander versetzt angeordnet sind. Die beiden aneinandergrenzenden Teilbereiche des formgebenden bzw. stützenden Elementes der Extrusionsanlage weisen dabei jeweils eine Nut auf, in die jeweils einer der beiden Teilquerschnitte des Passkörpers eingesetzt werden. Je nach Versatz der beiden Teilquerschnitte des Passkörpers ergibt sich eine mehr oder weniger starke - im Querschnitt betrachtet - seitliche Verschiebung der beiden aneinandergrenzenden Teilbereiche des formgebenden und/oder stützenden Elementes. Durch den Einsatz unterschiedlicher Passkörper, die sich in ihrem Versatz der beiden Teilquerschnitte unterscheiden, ist somit eine Anpassung des Versatzes der aneinandergrenzenden Teilbereiche möglich.

Im einfachsten und bevorzugten Fall weisen beide Teilquerschnitte des Passkörpers Rechteckform auf. Soweit der Versatz der beiden Teilquerschnitte als Grenzfall den Wert 0 einnimmt, entspricht dieser Passkörper somit einer handelsüblichen Passfeder. Passfedern werden allerdings zur Übertragung von Drehmomenten bei Wellen/Naben-Verbindungen eingesetzt, während im vorliegenden Fall die Übertragung von Momenten bzw. Kräften für die Erfindung von untergeordneter Bedeutung ist.

Alternativ zur Rechteckform der Teilquerschnitte können diese auch beispielsweise eine Halbkreisform aufweisen, grundsätzlich sind auch praktisch beliebige andere Teilquerschnitte denkbar.

Für ein typisches Extrusionswerkzeug zur Herstellung von insbesondere Fenster/oder Türprofilen aus thermoplastischem Kunststoff weisen sowohl das Extrusions-Mundstück als auch die einzelnen Kaliberabschnitte jeweils eine Vielzahl von Einzelelementen mit ebenen Trennflächen auf, so dass eine entsprechend große Anzahl von Passkörpern benötigt werden. Da die Passkörper nur in geringem Maße Kräfte übertragen müssen, können sie vorteilhaft aus Kunststoff, insbesondere aus faserverstärktem Kunststoff hergestellt werden. Alternativ ist die Herstellung im Druckgussverfahren aus üblichen Metallen, beispielsweise Zinklegierungen, vorgesehen.

Besonders vorteilhaft werden die Passkörper nicht in jedem Einzelfall individuell für die Verwendung in einem bestimmten formgebenden Element angepasst, sondern als Satz von Passkörpern vorgefertigt, wobei der Satz von Passkörpern wenigstens zwei, bevorzugt aber zwischen 5 und 15 unterschiedliche Passkörper mit jeweils unterschiedlichem Maß an Versatz aufweist, wobei vorteilhaft der Versatz zwischen je zwei Passkörpern systematisch ansteigt.

Das jeweils unterschiedliche Maß des Versatzes der einzelnen Passkörper eines solchen Passkörper-Satzes wird vorteilhaft mit einer symbolischen Kennzeichnung versehen, die auf das jeweilige Maß des Versatzes hinweist, beispielsweise eine Farbkennzeichnung, ein Symbol oder eine numerische Beschriftung. Zusätzlich kann vorteilhaft die Richtung des Versatzes gekennzeichnet werden.

### Kurze Beschreibung der Zeichnung

Nachfolgend wird die Erfindung anhand eines Ausführungsbeispiels sowie der Zeichnung beschrieben. Es zeigen dabei:
- Fig. 1a, 1b und 1c: einen erfindungsgemäßen Passkörper in Draufsicht, Querschnitt und Seitenansicht
- Fig. 2: eine schematische Darstellung der Verwendung der Passkörper

### Bester Weg zur Ausführung der Erfindung

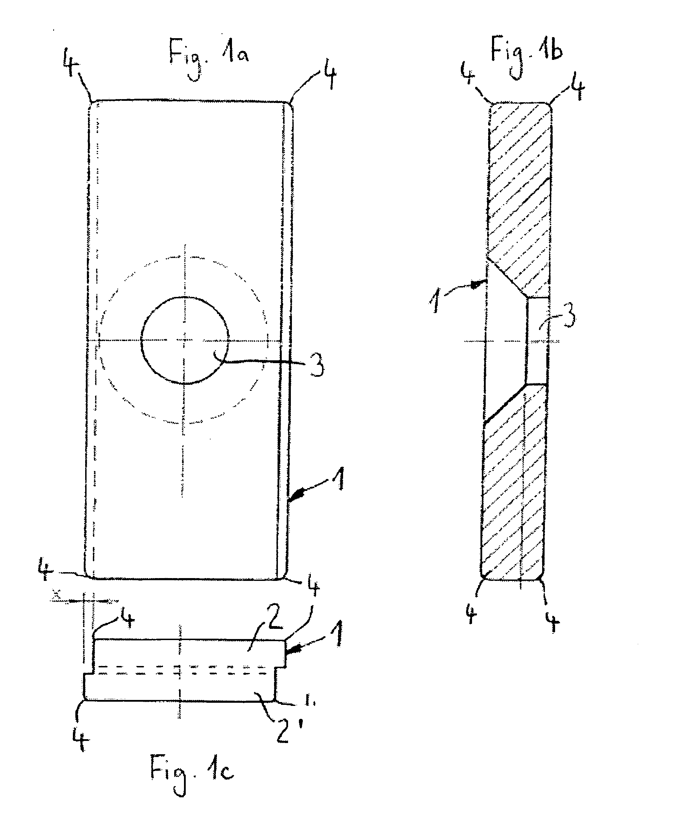

Wie aus Fig. 1a bis 1c ersichtlich, weist der erfindungsgemäße Passkörper ähnlich einer Passfeder zwei jeweils im wesentlichen rechteckige Teilquerschnitte 2, 2' auf, die um das Maß x (Fig. 1c) zueinander versetzt angeordnet sind. Die Passfeder 1 weist in ihrer Mitte eine mit einer Senkung versehende Bohrung 3 auf, die zur Befestigung des Passkörpers 1 mittels einer - nicht dargestellten - Schraube dient. Die oberen und unteren Kanten 4 des Passkörpers 1 sind im vorliegenden Beispiel abgerundet.

Der Passkörper 1 besteht im dargestellten Beispiel aus Kunststoff und ist im Spritzgussverfahren hergestellt. Eine in den Figuren nicht dargestellte farbliche Kennzeichnung symbolisiert den seitlichen Versatz der beiden Teilquerschnitte 2, 2'. Die Richtung des Versatzes ist zusätzlich durch einen Pfeil (nicht dargestellt) gekennzeichnet.

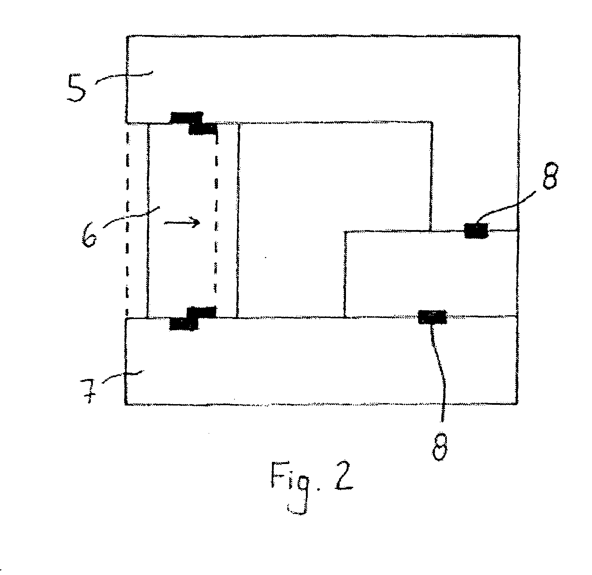

Wie aus Fig. 2 ersichtlich, werden die erfindungsgemäßen Passkörper 1 jeweils zwischen zwei formgebenden Elementen 5, 6 und 7 eines Extrusionswerkzeuges (Düse oder Kalibrierung) verwendet, um im vorliegenden Beispiel das Element 6 gegenüber den Elementen 5 und 7 um das Maß x zu versetzen. Da die weiteren formgebenden Elemente des dargestellten Teiles des Extrusionswerkzeuges keinen zusätzlichen Versatz benötigen, können Passelemente mit dem Versatz "0" (Bezugszeichen 8) verwendet werden, die herkömmlichen Passfedern entsprechen.

## Patentansprüche

1. Passkörper zur Fixierung und/oder Justierung der relativen Position wenigstens zweier, an einer ebenen Trennfläche aneinandergrenzender Teilbereiche eines formgebenden und/oder stützenden Elementes einer Extrusionsanlange, **dadurch gekennzeichnet, dass** der Passkörper - im Querschnitt betrachtet - einen ersten und einen zweiten im wesentlichen rechteckigen oder halbkreisförmigen Teilquerschnitt aufweist, wobei die beiden Teilquerschnitte gegeneinander versetzt angeordnet sind.

2. Passkörper nach Anspruch 1, **dadurch gekennzeichnet, dass** der Passkörper aus Kunststoff, insbesondere faserverstärktem Kunststoff, besteht.

3. Passkörper nach Anspruch 1, **dadurch gekennzeichnet, dass** der Passkörper im Metall-Druckgussverfahren, insbesondere aus einer Zinklegierung, hergestellt wurde.

4. Satz von Passkörpern nach einem der Ansprüche 1 bis 3, **dadurch gekennzeichnet, dass** der Satz von Passkörpern wenigstens zwei Passkörper aufweist, von denen ein Passkörper ein anderes Maß an Versatz der jeweiligen Teilquerschnitte aufweist als der andere Passkörper.

5. Satz von Passkörpern nach Anspruch 4, **dadurch gekennzeichnet, dass** die Passkörper eine das Maß des Versatzes symbolisierende Kennzeichnung, insbesondere Farbkennzeichnung, aufweisen.

6. Satz von Passkörpern nach Anspruch 4 oder 5, **dadurch gekennzeichnet, dass** die Passkörper eine Kennzeichnung bezüglich der Richtung des Versatzes aufweisen.

7. Verfahren zur Fixierung und/oder Justierung der relativen Position wenigstens zweier, an einer ebenen Trennfläche aneinandergrenzender Teilbereiche eines formgebenden und/oder stützenden Elementes einer Extrusionsanlange, **gekennzeichnet durch** die Verwendung wenigstens eines Passkörpers nach einem der Ansprüche 1 bis 3.

## Claims

1. Fitting body for fixing and/or adjusting the relative position of at least two sections, adjoining one another at a flat parting plane, of a shaping and/or supporting element of an extrusion line, **characterized in that** the fitting body - as viewed in cross section - has a first and a second substantially rectangular or semicircular partial cross section, wherein the two partial cross sections are offset from one another.

2. Fitting body according to Claim 1, **characterized in that** the fitting body is made of plastic, in particular fibre-reinforced plastic.

3. Fitting body according to Claim 1, **characterized in that** the fitting body has been produced by the metal die-casting process, in particular from a zinc alloy.

4. Set of fitting bodies according to one of Claims 1 to 3, **characterized in that** the set of fitting bodies has at least two fitting bodies, of which one fitting body has a size of offset of the respective partial cross sections which is different from the other fitting body.

5. Set of fitting bodies according to Claim 4, **characterized in that** the fitting bodies have a marking, in particular a colour marking, symbolizing the size of the offset.

6. Set of fitting bodies according to Claim 4 or 5, **characterized in that** the fitting bodies have a marking with regard to the direction of the offset.

7. Method of fixing and/or of adjusting the relative position of at least two sections, adjoining one another at a flat parting plane, of a shaping and/or supporting element of an extrusion line, **characterized by** the use of at least one fitting body according to one of Claims 1 to 3.

## Revendications

1. Clavette d'ajustage pour la fixation et/ou l'ajustage de la position relative d'au moins deux régions partielles, adjacentes à une surface de séparation plane, d'un élément de façonnage et/ou de support d'une installation d'extrusion, **caractérisée en ce que** la clavette d'ajustage - vue en section transversale - présente une première et une deuxième section transversale partielle essentiellement rectangulaire ou semi-circulaire, les deux sections transversales étant disposées de manière décalée l'une de l'autre.

2. Clavette d'ajustage selon la revendication 1, **caractérisée en ce que** la clavette d'ajustage se compose de plastique, en particulier de plastique renforcé par des fibres.

3. Clavette d'ajustage selon la revendication 1, **caractérisée en ce que** la clavette d'ajustage a été fabriquée au cours d'un procédé de coulage sous pression de métal, en particulier en un alliage de zinc.

4. Jeu de clavettes d'ajustage selon l'une quelconque des revendications 1 à 3, **caractérisé en ce que** le jeu de clavettes d'ajustage présente au moins deux clavettes d'ajustage dont une clavette d'ajustage présente une autre ampleur de décalage des sections transversales partielles respectives que l'autre clavette d'ajustage.

5. Jeu de clavettes d'ajustage selon la revendication 4, **caractérisé en ce que** les clavettes d'ajustage présentent une caractéristique symbolisant l'ampleur du décalage, en particulier une caractéristique de couleur.

6. Jeu de clavettes d'ajustage selon la revendication 4 ou 5, **caractérisé en ce que** les clavettes d'ajustage présentent une caractéristique indiquant la direction du décalage.

7. Procédé de fixation et/ou d'ajustage de la position relative d'au moins deux régions partielles, adjacentes à une surface de séparation plane, d'un élément de façonnage et/ou de support d'une installation d'extrusion, **caractérisé par** l'utilisation d'au moins une clavette d'ajustage selon l'une quelconque des revendications 1 à 3.
